# EUROPEAN PATENT APPLICATION

(11) **EP 1 365 409 A2**
(43) Date of publication of application: **26.11.2003**
(21) Application number: 03253185.7
(22) Date of filing: 21.05.2003
(51) Int. Cl.: G11B 27/034, G11B 27/34

(54) **Recording/Reproducing apparatus**

(30) Priority: 21.05.2002 JP 2002145588
(71) Applicant: ORION ELECTRIC CO., Ltd., Takefu-City, Fukui 915 (JP)
(72) Inventor: Takinami, Eiichirou, Takefu-City, Fukui (JP); Inotani, Kazunori, Takefu-City, Fukui (JP); Miyazaki, Hiroyuki, Takefu-City, Fukui (JP)
(74) Representative: Nettleton, John Victor

(57) **Abstract**

A recording/reproducing apparatus which can easily implement editing operations in a cut mode for deleting a first portion and a last portion of a video file. When a cut mode is started, a video file is reproduced in a repeat manner and a cut start point A is designated while observing the displayed. When reproduction is completed to the end, again reproduction is started from the beginning. While observing the displayed screen, a cut end point B is designated. The area ranging from the cut end point A to the cut end point B, including a file start point C and a file end point D, can be deleted.

## Description

### BACKGROUND OF THE INVENTION

### Field of the Invention:

The present invention relates to a recording/reproducing apparatus having an edit function for a video file on which videos and audios are recorded.

### Prior Art:

For example, a recent video recording and reproducing apparatus for recording and reproducing TV broadcasting programs uses disc-shaped recording means such as hard disc, DVD-R, DVD-RW and so forth as a random-access mass-storage means.

When a program is recorded on a recording medium, recording data encoding video signals are stored and one video file is formed. Here, some video signals include audio signals and some other video signals do not include audio signals. Hereunder, both video signals are referred as video signals.

A recording/reproducing apparatus in which a plurality of video files are recorded has an edit function for video files. The edit function includes such modes as a copy of a video file, deletion, division, cut, coupling at least two video files. The cut mode deletes a video file partly, i.e., an optional area designated by a user is deleted.

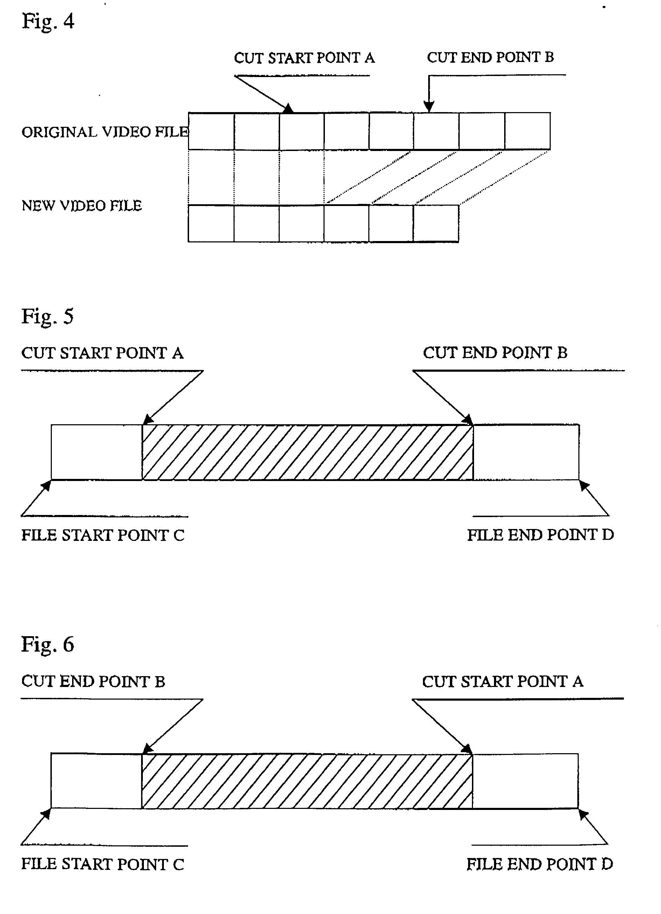

When editing in a cut mode, first, a video file to be edited is designated and reproduced. While reproducing, as shown in Fig. 5, a cut start point A of an area to be deleted is designated, and a cut end point B is designated. In the drawing, C represents a file start point which is a beginning of a video file, and D represents a file end point which is a last of a video file.

When a cut start point A and a cut end point B are designated, the shaded area in the drawing, ranging from the cut start point A to the cut end point B, is deleted. And, the area between the file start point C and the cut start point A and the area between the cut end point B and the file end point D are connected continuously, thereby forming a new video file after completion of editing.

When deleting a first portion and a last portion of a video, as shown in Fig. 6, while reproducing, first a cut start point A is designated, and next a cut end point B is designated. The cut end point B comes to be located in the front side of the cut start point B. The front side and the rear side used herein correspond to an earlier moment and a later moment respectively at the time of reproducing the video file.

The above designation, however, results in a deletion the shaded area, which is expected to be remained, ranging from the cut end point B to the cut start point A, as shown in Fig. 6.

In view of this, at the first portion of the video file, a file start point C is designated as the cut start point A and further a cut end point B is designated. Next, at the last portion of the file, a cut start point A is designated and further a file end point D is designated as a cut end point B. Thus, it is necessary to operate the cut mode in twice. Such operation is troublesome to a user and takes much time for editing operation, thus resulting in a bad efficiency.

### SUMMARY OF THE INVENTION

It is therefore an object of the present invention to provide a recording/reproducing apparatus which can easily implement editing operations in a cut mode.

In order to attain the above objects, the present invention provides the recording/reproducing apparatus comprising an area designation means for designating a start point and an end point of a portion to be deleted in a video file recorded on a random access recording medium, a reproducing means for repeat reproduction of the video file at the time of designating the start point and the end point, and a deletion means for deleting an area ranging from the start point and the end point, for implementing an edit function to delete a video file partly.

When deleting a first portion and a last portion of a video file, provided that the both portions are taken to be one area, the cut end portion B comes to be located in the front side of the cut start point B. By setting a repeat reproduction, after the deletion start point is designated at the last portion of the video file, reproduction is started from the first portion of the video file, so that the cut end point can be designated at the first portion of the video file. Thus, the deletion means delete the area ranging from the first portion of the video file to the cut end point and the area ranging from the cut start point to the last portion of the video file. Namely, when the portions to be deleted are in a continuous situation with each other, two portions to be deleted in the video file can be deleted in a single operation.

Further, the present invention provides a recording/reproducing apparatus comprising an area designating means for designating a start point and an end point of a portion to be deleted in a video file, and a deleting means for deleting respectively the area ranging from a first portion of said video file to said end point and the area ranging from said start point to a last portion of said video file in case said end point is located in the front side of said start point. By designating a start point and an end point while reproducing a video file, the end point is designated first, and thereafter the start point is designated. Here, reproducing includes a repeat reproducing. This apparatus can also delete a first portion and a last portion of a video file in a single operation.

A video file is constituted of a plurality of blocks, and the blocks including a designated start point and a end point are not deleted in an edit function for a partial deleting. Thus, when a first or last block of a video file is desired to be deleted, even if such a block is designated for deletion, deletion cannot be attained.

Accordingly, if a last block of a video file is designated as a start point and a block immediately after a first block of a video file is designated as an end point, the first block can be deleted. Likewise, if a block immediately before a last block of a video file is designated as a start point and a first block of a video file is designated as an end point, the last block can be deleted.

### BRIEF DESCRIPTION OF THE DRAWINGS

Fig. 1 is a schematic block diagram showing one embodiment of a recording/reproducing apparatus according to the present invention;
Fig. 2 is an operation flowchart in relation to a cut mode;
Fig. 3 is a view showing a video file, wherein a first portion and a last portion of a video file are deleted at the time a cut end point is located in the front side of a cut start point;
Fig. 4 is a view showing the relation between a designation area of a video file and the blocks to be deleted;
Fig. 5 is a view showing a video file to be deleted partly; and
Fig. 6 is a view showing a video file, wherein a video file is partly deleted in a conventional art at the time a cut end point is located in the front side of a cut start point.

### DETAILED DESCRIPTION OF THE PREFERRED EMBODIMENTS

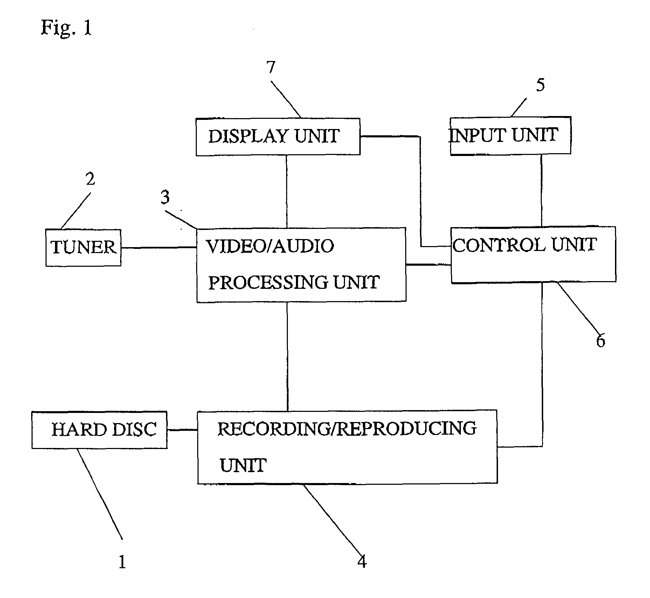

One embodiment of a recording/reproducing apparatus according to the present invention is shown in Fig. 1. The recording/reproducing apparatus is provided with a hard disc 1 as a random access recording medium, a tuner 2, a video/audio processing unit 3, a recording/reproducing unit 4, an input unit 5, and a control unit 6.

Waves of a ground wave broadcasting or a BS broadcasting are input into the tuner 2. The tuner 2 selects waves of a selected channel, and the received video signals are output to the video/audio processing unit 3. At the video/audio processing unit 3, the input video signals are demodulated or converted to a digital signal, and the digital video signals encoded are output to the recording/reproducing unit 4. At the recording/reproducing unit 4, a video file is formed in a predetermined area of the hard disc 1, and subsequently the encoded video signals are written therein. Thus, a broadcast program is recorded on the hard disc 1.

When the recorded program is reproduced, the recording/reproducing unit 4 reads out the video file from the hard disc 1 and outputs the data stored in the file to the video/audio processing unit 3. At the video/audio processing unit 3, the encoded video signals are decoded and converted to analog signals. The obtained analog video signals are output to a display unit 7 such as a monitor and to a speaker.

The input unit 5 is a remote controller or an operation panel provided at the main body of the apparatus, which issues a direction of recording/reproducing or editing a video file. The control unit 6 controls the tuner 2, the video/audio processing unit 3, the recording/reproducing unit 4, and the display unit 7 on the basis of the data input from the input unit 5.

The control unit 6 has an editing function of a video file, and implements a copy mode for copying a video file, a deletion mode for deleting an unnecessary video file, a division mode for dividing a video file into two parts, a combining mode for combining at least two video files into one video file, and a cut mode for deleting an unnecessary portion of a video file, respectively.

When a repeat reproduction (continuous reproduction) mode is implemented in a cut mode and a cut start point A is designated on a video file and subsequently a cut end point B is designated on a video file, the control unit 6 controls to delete the area between the cut start point A and the cut end point B.

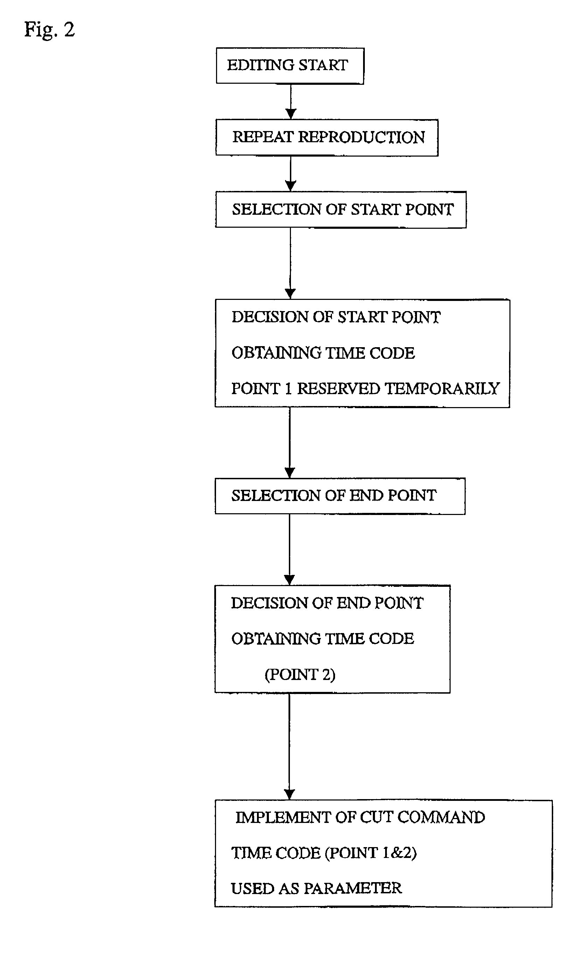

The operation process in a cut mode will be explained with the accompanying flowchart in Fig. 2. When a cut mode is selected from editing menus at the input unit 5, a list of video files stored is displayed. When a video file to be edited is selected from the displayed list, a repeat reproduction of the selected video file is started.

While observing the reproduced screen, a cut start point A is selected at a portion to be deleted. The reproduction is stopped temporarily, and a confirmation screen is displayed. When confirmed and decided, the cut start point A is designated. At that time, a time code is obtained and stored temporarily as a point 1 on a memory. Here, the time code is a counter showing the reproduction time started from the beginning of a video file.

After that, the repeat reproduction of the video file is started automatically, and the cut end point B is designated in the same way. A time code is obtained and stored temporarily as a point 2 on a memory. Subsequently, a cut command is performed, and the area between the cut start point A and the cut end point B is deleted, as shown in Fig. 5, and the cut mode is terminated.

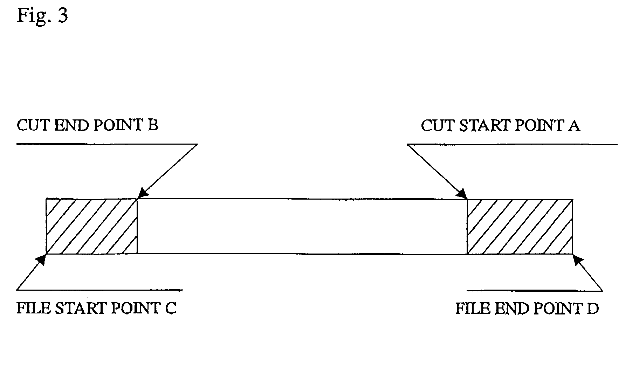

When, after the cut start point being designated, the cut end point B is not designated and the video file is reproduced to the end, the video file is reproduced from the beginning. When the cut end point is designated at the first portion of the video file in the same manner as described above, the cut end point B is located in the front side of the cut start point A, as shown in Fig. 3.

The control unit 6 determines, utilizing the time codes as a parameter, the positions of the cut start point A and the cut end point B as to which point is located in a front side. In case of point 1 < point 2, the control unit 6 determines that the respective points are designated as shown in Fig. 5, and the area between the cut start point A and the cut end portion B is deleted. In case of point 1 > point 2, the control unit 6 determines that the respective points are designated as shown in Fig. 3, the area between the file start point C and the cut end point B and the area between the cut end point B and the file end point D are deleted, respectively.

Namely, by performing a repeat reproduction of the video file, the file start point C and the file end point D are regarded as merely passing points. Accordingly, the area ranging from the cut start point A to the cut end point B, including the file end point D and the file start point C, is deleted without fail.

A video file to be recorded on a recording medium is constituted of a plurality of blocks, each of which is, e.g., a minimum unit of 0.5 sec. In a cut mode, as shown in Fig. 4, the blocks including the designated cut start point A and the cut end point B are remained and the blocks sandwiched by both blocks are deleted. When the file start point C is designated as a cut start point A, or when the file end point D is designated as a cut end point B, a first block including the start point C or a last block including the file end point D remains undeleted.

However, in the above-mentioned cut mode according to the present invention, a first block including the start point C or a last block including the file end point D can be deleted. Therefore, when a renewed video file is reproduced after completion of editing, unnecessary video images are not displayed on a screen.

While there has been described in connection with the preferred embodiments of the invention, it will be obvious to those skilled in the art that various changes and modifications may be made to cover in the appended claims all such changes and modifications as fall within the scope of the invention. For example, instead of hard discs, rewritable DVD, CD, MD and semiconductor memory are applicable as a recording medium. A recording/reproducing apparatus including such a recording medium may be applied to an audio appliance which records and reproduces audio signals for music or the like.

In addition, a control unit can be arranged to control in such a manner that a normal reproduction is performed in a cut mode, and that a cut start point A can be designated while reproduction is continued even if a cut start point A is designated in advance. In this case, although the situation is in a state of point 1 > point 2, each of the file start point C and the file end point D is regarded as a designated point, so that it is determined that the area ranging from the cut start point A to the file end point D and the area ranging from the file start point C to the cut end point B are designated. Accordingly, the area ranging from the file start point C to the cut end point B and the area ranging from the cut start point A to the file end point D are deleted, respectively. Namely, in case any two points are designated in a video file, when the cut end point B is located in the front side of the cut start point A, editing is controlled so as to delete a rear side of the cut start point A and a front side of the cut end point at any time. With this arrangement, the area ranging from the cut start point A to the cut end point B, including the file end point D and the file start point C, can be deleted. Further, compared with the case utilizing a repeat reproduction, required time for designating the cut start point A and the cut end point B can be shortened. Since the file start point C and the file end point D are designated as a virtual point, a first block and an end block including these points are deleted.

As apparent from the above-described explanation, according to the present invention, when a first portion and a last portion of a video file are expected to be deleted, both portions can be deleted in a single operation by designating a cut start point and a cut end point while performing a repeat reproduction, thus resulting in a simplification of operation and a reduction of an operation time.

## Claims

1. A recording/reproducing apparatus having an edit function for partly deleting a video file recorded on a random access recording medium, said apparatus comprising an area designation means for designating a start point and an end point of a portion to be deleted in said video file, a reproducing means for repeat reproduction of said video file at the time of designating said start point and said end point, and a deletion means for deleting an area ranging from said start point and said end point.

2. A recording/reproducing apparatus as claimed in Claim 1, wherein said deleting means deletes respectively the area ranging from a first portion of said video file to said end point and the area ranging from said start point to a last portion of said video file in case said end point is located in the front side of said start point.

3. A recording/reproducing apparatus having an edit function for partly deleting a video file recorded on a random access recording medium, said apparatus comprising an area designation means for designating a start point and an end point of a portion to be deleted in said video file and a deleting means for deleting respectively the area ranging from a first portion of said video file to said end point and the area ranging from said start point to a last portion of said video file in case said end point is located in the front side of said start point.

4. A recording/reproducing apparatus as claimed in Claim 3, said apparatus further comprising a reproducing means for reproducing said video file at the time of designating said start point and said end point.

5. A recording/reproducing apparatus as claimed in Claim 1, wherein said video file is constituted of a plurality of blocks, and a block including said start point and a block including said end point are excluded from an area to be deleted.

6. A recording/reproducing apparatus as claimed in Claim 2, wherein said video file is constituted of a plurality of blocks, and a block including said start point and a block including said end point are excluded from an area to be deleted.

7. A recording/reproducing apparatus as claimed in Claim 3, wherein said video file is constituted of a plurality of blocks, and a block including said start point and a block including said end point are excluded from an area to be deleted.

8. A recording/reproducing apparatus as claimed in Claim 4, wherein said video file is constituted of a plurality of blocks, and a block including said start point and a block including said end point are excluded from an area to be deleted.
